# EUROPÄISCHE PATENTSCHRIFT

(11) **EP 1 725 105 B1**
(45) Veröffentlichungstag und Bekanntmachung des Hinweises auf die Patenterteilung: **14.05.2008**
(21) Anmeldenummer: 05731791.9
(22) Anmeldetag: 04.03.2005
(51) Int. Cl.: A01N 47/06, A01N 43/38

(54) **SUSPENSIONSKONZENTRATE AUF ÖLBASIS**
OIL-BASED SUSPENSION CONCENTRATES
CONCENTRES EN SUSPENSION A BASE D'HUILE

(30) Priorität: 06.03.2004 DE 102004011006
(43) Veröffentlichungstag der Anmeldung: 29.11.2006
(73) Patentinhaber: Bayer CropScience AG, 40789 Monheim (DE)
(72) Erfinder: FISCHER, Reiner, 40789 Monheim (DE); RECKMANN, Udo, 50823 Köln (DE); VERMEER, Ronald, 51371 Leverkusen (DE)
(86) Internationale Anmeldenummer: PCT/EP2005/002294
(87) Internationale Veröffentlichungsnummer: WO 2005/084441

(56) Entgegenhaltungen:
- WO-A-97/36868
- WO-A-98/05638
- WO-A-02/098230
- WO-A-03/000053

## Beschreibung

Die vorliegende Erfindung betrifft neue, ölbasierte Suspensionskonzentrate von cyclischen Ketoenolen, ein Verfahren zur Herstellung dieser Formulierungen und deren Verwendung zur Applikation der enthaltenen cyclischen Ketoenole.

Es sind bereits zahlreiche wasserfreie Suspensionskonzentrate von agrochemischen Wirkstoffen bekannt geworden. So werden in der EP-A 0 789 999 Formulierungen dieses Typs beschrieben, die neben Wirkstoff und Öl ein Gemisch verschiedener Tenside, - darunter auch solche, die als Penetrationsförderer dienen -, sowie ein hydrophobiertes Alumoschichtsilikat als Verdickungsmittel enthalten. Die Stabilität dieser Zubereitungen ist gut. Nachteilig ist aber, dass zwingend ein Verdickungsmittel vorhanden ist, denn dadurch wird die Herstellung aufwendiger. Außerdem absorbiert das Verdickungsmittel jeweils einen Teil der zugesetzten Menge an Penetrationsförderer, der deshalb für seine eigentliche Funktion nicht zur Verfügung steht.

Weiterhin sind aus der US-A 6 165 940 schon nicht-wässrige Suspensionskonzentrate bekannt, in denen außer agrochemischem Wirkstoff, Penetrationsförderer und Tensid bzw. Tensid-Gemisch ein organisches Solvens vorhanden ist, wobei als derartige Lösungsmittel auch Parafinöl oder Pflanzenöl-Ester in Frage kommen. Die Kulturpflanzenverträglichkeit und/oder biologische Wirksamkeit und/oder die Stabilität der aus diesen Formulierungen durch Verdünnen mit Wasser herstellbaren Spritzbrühen ist jedoch nicht immer ausreichend.

Es wurden nun neue Suspensionskonzentrate auf Ölbasis gefunden, die aus
- mindestens einer bei Raumtemperatur festen Verbindung der Formel (I') 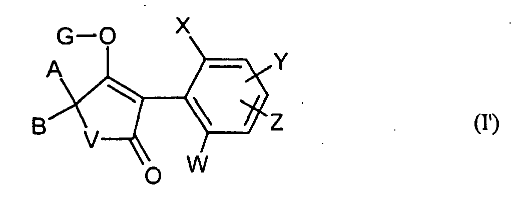 in welcher
   - V: für N-D steht,
   - X: für Halogen, Alkyl, Alkoxy, Halogenalkyl, Halogenalkoxy oder Cyano steht,
   - W, Y und Z: unabhängig voneinander für Wasserstoff, Halogen, Alkyl, Alkoxy, Halogenalkyl, Halogenalkoxy oder Cyano stehen,
   - A: für Wasserstoff, jeweils gegebenenfalls durch Halogen substituiertes Alkyl, Alkoxyalkyl, gesättigtes, gegebenenfalls substituiertes Cycloalkyl steht, in welchem gegebenenfalls mindestens ein Ringatom durch ein Heteroatom ersetzt ist,
   - B: für Wasserstoff oder Alkyl steht,
   - A und B: gemeinsam mit dem Kohlenstoffatom an das sie gebunden sind, für einen gesättigten oder ungesättigten, gegebenenfalls mindestens ein Heteroatom enthaltenden unsubstituierten oder substituierten Cyclus stehen,
   - D: für Wasserstoff oder einen gegebenenfalls substituierten Rest aus der Reihe Alkyl, Alkenyl, Alkoxyalkyl, gesättigtes Cycloalkyl steht, in welchem gegebenenfalls eines oder mehrere Ringglieder durch Heteroatome ersetzt sind,
   - A und D: gemeinsam mit den Atomen an die sie gebunden sind für einen gesättigten oder ungesättigten und gegebenenfalls mindestens ein Heteroatom enthaltenden, im A,D-Teil unsubstituierten oder substituierten Cyclus stehen,
   - G: für Wasserstoff (a) oder für eine der Gruppen 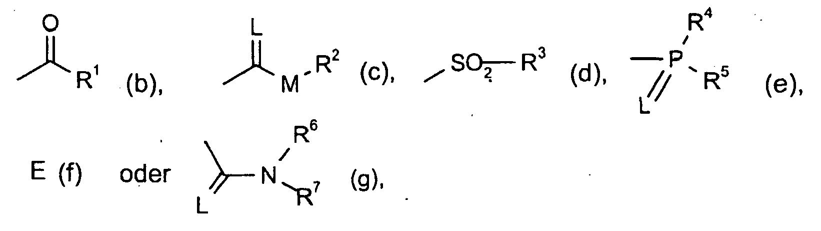 steht,
   worin
   E für ein Metallion oder ein Ammoniumion steht,
   L für Sauerstoff oder Schwefel steht,
   M für Sauerstoff oder Schwefel steht,
   R¹ für jeweils gegebenenfalls durch Halogen substituiertes Alkyl, Alkenyl, Alkoxyalkyl, Alkylthioalkyl, Polyalkoxyalkyl oder gegebenenfalls durch Halogen, Alkyl oder Alkoxy substituiertes Cycloalkyl, das durch mindestens ein Heteroatom unterbrochen sein kann, jeweils gegebenenfalls substituiertes Phenyl, Phenylalkyl, Hetaryl, Phenoxyalkyl oder Hetaryloxyalkyl steht,
   R² für jeweils gegebenenfalls durch Halogen substituiertes Alkyl, Alkenyl, Alkoxyalkyl, Polyalkoxyalkyl oder für jeweils gegebenenfalls substituiertes Cycloalkyl, Phenyl oder Benzyl steht,
   R³ für gegebenenfalls durch Halogen substituiertes Alkyl oder gegebenenfalls substituiertes Phenyl steht,
   R⁴ und R⁵ unabhängig voneinander für jeweils gegebenenfalls durch Halogen substituiertes Alkyl, Alkoxy, Alkylamino, Dialkylamino, Alkylthio, Alkenylthio, Cycloalkylthio oder für jeweils gegebenenfalls substituiertes Phenyl, Benzyl, Phenoxy oder Phenylthio stehen und
   R⁶ und R⁷ unabhängig voneinander für Wasserstoff, jeweils gegebenenfalls durch Halogen substituiertes Alkyl, Cycloalkyl, Alkenyl, Alkoxy, Alkoxyalkyl, für gegebenenfalls substituiertes Phenyl, für gegebenenfalls substituiertes Benzyl oder gemeinsam mit dem N-Atom, an das sie gebunden sind, für einen gegebenenfalls durch Sauerstoff oder Schwefel unterbrochenen gegebenenfalls substituierten Ring stehen und
- mindestens einem Penetrationsförderer der Formel (Id)

   CH₃-(CH₂)ₜ-CH₂-O-(-CH₂-CH₂-O-)ᵤ-H (Id)

   in welcher
   - t: für Zahlen von 9 bis 10,5 steht
   und
   - u: für Zahlen von 7 bis 9 steht,
- mindestens einem Pflanzenöl,
- mindestens einem nicht-ionischen Tensid und/oder mindestens einem anionischen Tensid und
- gegebenenfalls einem oder mehreren Zusatzstoffen aus den Gruppen der Emulgiermittel, der schaumhemmenden Mittel, der Konservierungsmittel, der Antioxydantien, der Farbstoffe und/oder der inerten Füllmaterialien
bestehen.

Weiterhin wurde gefunden, dass sich die erfindungsgemäßen Suspensionkonzentrate auf Ölbasis herstellen lassen, indem man
- mindestens eine bei Raumtemperatur feste Verbindung der Formel (I'),
- mindestens einen Penetrationsförderer der Formel (Id),
- mindestens ein Pflanzenöl,
- mindestens ein nicht-ionisches Tensid und/oder mindestens ein anionisches Tensid und
- gegebenenfalls einen oder mehrere Zusatzstoffe aus den Gruppen der Emulgiermittel, der schaumhemmenden Mittel, der Konservierungsmittel, der Antioxydantien, der Farbstoffe und/oder der inerten Füllmaterialien
miteinander vermischt und die entstehende Suspension gegebenenfalls anschließend mahlt.

Schließlich wurde gefunden, dass sich die erfindungsgemäßen Suspensionskonzentrate auf Ölbasis sehr gut zur Applikation der enthaltenen Verbindungen der Formel (I') auf Pflanzen und/oder deren Lebensraum eignen.

Es ist als äußerst überraschend zu bezeichnen, dass die erfindungsgemäßen Suspensionskonzentrate auf Ölbasis eine deutlich bessere Kulturpflanzenverträglichkeit zeigen, obwohl die biologische Wirkung / Aufnahme von Fremdstoffe im Pflanzengewebe eindeutig höher ist im Vergleich zu den am ähnlichsten zusammengesetzten, vorbekannten Formulierungen. Dieser Effekt war aufgrund des vorbeschriebenen Standes der Technik nicht vorhersehbar.

Die erfindungsgemäßen Suspensionskonzentrate auf Ölbasis zeichnen sich auch durch eine Reihe von Vorteilen aus. So ist deren Herstellung weniger aufwendig als die Zubereitung entsprechender Formulierungen, in denen Verdickungsmittel vorhanden sind. Vorteilhaft ist weiterhin, dass beim Verdünnen der erfindungsgemäßen Konzentrate mit Wasser weder eine signifikante Aufrahmung noch eine störende Flockenbildung eintritt, was bei entsprechenden vorbekannten Zubereitungen häufig der Fall ist. Schließlich begünstigen die erfindungsgemäßen Formulierungen die Kulturpflanzenverträglichkeit und/oder die biologische Wirksamkeit der enthaltenen aktiven Komponenten, so dass im Vergleich zu herkömmlichen Zubereitungen entweder eine höhere Wirksamkeit erzielt wird oder weniger Wirkstoff erforderlich ist.

Bevorzugt sind Ölsuspensionskonzentrate auf Ölbasis enthaltend Verbindungen der Formel (I'), in welcher die Reste die folgende Bedeutung haben:
- V: steht für N-D,
- W: steht bevorzugt für Wasserstoff, C₁-C₄-Alkyl, C₁-C₄-Alkoxy, Chlor, Brom oder Fluor,
- X: steht bevorzugt für C₁-C₄-Alkyl, C₁-C₄-Alkoxy, C₁-C₄-Halogenalkyl, Fluor, Chlor oder Brom,
- Y und Z: stehen unabhängig voneinander bevorzugt für Wasserstoff, C₁-C₄-Alkyl, Halogen, C₁-C₄-Alkoxy oder C₁-C₄-Halogenalkyl,
- A: steht bevorzugt für Wasserstoff oder jeweils gegebenenfalls durch Halogen substituiertes C₁-C₆-Alkyl oder C₃-C₈-Cycloalkyl,
- B: steht bevorzugt für Wasserstoff, Methyl oder Ethyl,
- A, B: und das Kohlenstoffatom an das sie gebunden sind, stehen bevorzugt für gesättigtes C₃-C₆-Cycloalkyl, worin gegebenenfalls ein Ringglied durch Sauerstoff oder Schwefel ersetzt ist und welches gegebenenfalls einfach oder zweifach durch C₁-C₄-Alkyl, Trifluormethyl oder C₁-C₄-Alkoxy substituiert ist,
- D: steht bevorzugt für Wasserstoff, jeweils gegebenenfalls durch Fluor oder Chlor substituiertes C₁-C₆-Alkyl, C₃-C₄-Alkenyl oder C₃-C₆-Cycloalkyl,
- A und D: stehen gemeinsam bevorzugt für jeweils gegebenenfalls durch Methyl substituiertes C₃-C₄-Alkandiyl, worin gegebenenfalls eine Methylengruppe durch Schwefel ersetzt ist,
- G: steht bevorzugt für Wasserstoff (a) oder für eine der Gruppen 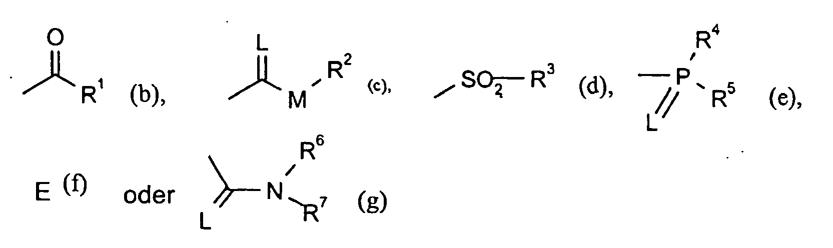 insbesondere für (a), (b), (c) oder (g)
in welchen
E für ein Metallion oder ein Ammoniumion steht,
L für Sauerstoff oder Schwefel steht und
M für Sauerstoff oder Schwefel steht,
- R¹: steht bevorzugt für jeweils gegebenenfalls durch Halogen substituiertes C₁-C₁₀-Alkyl, C₂-C₁₀-Alkenyl, C₁-C₄-Alkoxy-C₁-C₄-alkyl, C₁-C₄-Alkylthio-C₁-C₄-alkyl oder gegebenenfalls durch Fluor, Chlor, C₁-C₄-Alkyl oder C₁-C₂-Alkoxy substituiertes C₃-C₆-Cycloalkyl, für gegebenenfalls durch Fluor, Chlor, Brom, Cyano, Nitro, C₁-C₄-Alkyl, C₁-C₄-Alkoxy, Trifluormethyl oder Trifluormethoxy substituiertes Phenyl,
für jeweils gegebenenfalls durch Chlor oder Methyl substituiertes Pyridyl oder Thienyl,
- R²: steht bevorzugt für jeweils gegebenenfalls durch Fluor oder Chlor substituiertes C₁-C₁₀-Alkyl, C₂-C₁₀-Alkenyl, C₁-C₄-Alkoxy-C₂-C₄-alkyl,
für gegebenenfalls durch Methyl oder Methoxy substituiertes C₅-C₆-Cycloalkyl oder
für jeweils gegebenenfalls durch Fluor, Chlor, Brom, Cyano, Nitro, C₁-C₄-Alkyl, C₁-C₄-Alkoxy, Trifluormethyl oder Trifluormethoxy substituiertes Phenyl oder Benzyl,
- R³: steht bevorzugt für gegebenenfalls durch Fluor substituiertes C₁-C₄-Alkyl oder für gegebenenfalls durch Fluor, Chlor, Brom, C₁-C₄-Alkyl, C₁-C₄-Alkoxy, Trifluormethyl, Trifluormethoxy, Cyano oder Nitro substituiertes Phenyl,
- R⁴: steht bevorzugt für jeweils gegebenenfalls durch Fluor oder Chlor substituiertes C₁-C₄-Alkyl, C₁-C₄-Alkoxy, C₁-C₄-Alkylamino, C₁-C₄-Alkylthio oder für jeweils gegebenenfalls durch Fluor, Chlor, Brom, Nitro, Cyano, C₁-C₄-Alkoxy, Trifluormethoxy, C₁-C₄-Alkylthio, C₁-C₄-Halogenalkylthio, C₁-C₄-Alkyl oder Trifluormethyl substituiertes Phenyl, Phenoxy oder Phenylthio,
- R⁵: steht bevorzugt für C₁-C₄-Alkoxy oder C₁-C₄-Thioalkyl,
- R⁶: steht bevorzugt für C₁-C₆-Alkyl, C₃-C₆-Cycloalkyl, C₁-C₆-Alkoxy, C₃-C₆-Alkenyl, C₁-C₄-Alkoxy-C₁-C₄-alkyl,
- R⁷: steht bevorzugt für C₁-C₆-Alkyl, C₃-C₆-Alkenyl oder C₁-C₄-Alkoxy-C₁-C₄-alkyl,
- R⁶ und R⁷: stehen zusammen bevorzugt für einen gegebenenfalls durch Methyl oder Ethyl substituierten C₃-C₆-Alkylenrest, in welchem gegebenenfalls ein Kohlenstoffatom durch Sauerstoff oder Schwefel ersetzt ist.
- V: steht für N-D,
- W: steht besonders bevorzugt für Wasserstoff, Methyl, Ethyl, Chlor, Brom oder Methoxy,
- X: steht besonders bevorzugt für Chlor, Brom, Methyl, Ethyl, Propyl, i-Propyl, Methoxy, Ethoxy oder Trifluormethyl,
- Y und Z: stehen besonders bevorzugt unabhängig voneinander für Wasserstoff, Fluor, Chlor, Brom, Methyl, Ethyl, Propyl, i-Propyl, Trifluormethyl oder Methoxy,
- A: steht besonders bevorzugt für Methyl, Ethyl, Propyl, i-Propyl, Butyl, i-Butyl, sec.-Butyl, tert.-Butyl, Cyclopropyl, Cyclopentyl oder Cyclohexyl,
- B: steht besonders bevorzugt für Wasserstoff, Methyl oder Ethyl,
- A, B: und das Kohlenstoffatom an das sie gebunden sind, stehen besonders bevorzugt für gesättigtes C₆-Cycloalkyl, worin gegebenenfalls ein Ringglied durch Sauerstoff ersetzt ist und welches gegebenenfalls einfach durch Methyl, Ethyl, Trifluormethyl, Methoxy, Ethoxy, Propoxy oder Butoxy substituiert ist,
- D: steht besonders bevorzugt für Wasserstoff, für Methyl, Ethyl, Propyl, i-Propyl, Butyl; i-Butyl, Allyl, Cyclopropyl, Cyclopentyl oder Cyclohexyl,
- A und D: stehen gemeinsam besonders bevorzugt für gegebenenfalls durch Methyl substituiertes C₃-C₄-Alkandiyl,
- G: steht besonders bevorzugt für Wasserstoff (a) oder für eine der Gruppen 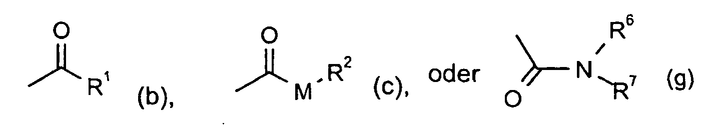 in welchen
M für Sauerstoff oder Schwefel steht,
- R¹: steht besonders bevorzugt für C₁-C₈-Alkyl, C₂-C₄-Alkenyl, Methoxymethyl, Ethoxymethyl, Ethylthiomethyl, Cyclopropyl, Cyclopentyl oder Cyclohexyl,
für gegebenenfalls durch Fluor, Chlor, Brom, Cyano, Nitro, Methyl, Ethyl, Methoxy, Trifluormethyl oder Trifluormethoxy substituiertes Phenyl,
für jeweils gegebenenfalls durch Chlor oder Methyl substituiertes Pyridyl oder Thienyl,
- R²: steht besonders bevorzugt für C₁-C₈-Alkyl, C₂-C₄-Alkenyl, Methoxyethyl, Ethoxyethyl oder für Phenyl oder Benzyl,
- R⁶ und R⁷: stehen unabhängig voneinander besonders bevorzugt für Methyl, Ethyl oder zusammen für einen C₅-Alkylenrest, in welchem die C₃-Methylengruppe durch Sauerstoff ersetzt ist.
- V: steht für N-D,
- W: steht ganz besonders bevorzugt für Wasserstoff oder Methyl,
- X: steht ganz besonders bevorzugt für Chlor, Brom oder Methyl,
- Y und Z: stehen ganz besonders bevorzugt unabhängig voneinander für Wasserstoff, Chlor, Brom oder Methyl,
- A, B: und das Kohlenstoffatom an das sie gebunden sind, stehen ganz besonders bevorzugt für gesättigtes C₆-Cycloalkyl, in welchem gegebenenfalls ein Ringglied durch Sauerstoff ersetzt ist und welches gegebenenfalls einfach durch Methyl, Trifluormethyl, Methoxy, Ethoxy, Propoxy oder Butoxy substituiert ist,
- D: steht ganz besonders bevorzugt für Wasserstoff,
- G: steht ganz besonders bevorzugt für Wasserstoff (a) oder für eine der Gruppen 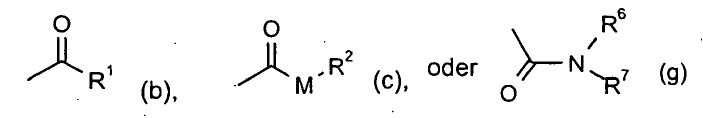 in welchen
- M: für Sauerstoff oder Schwefel steht,
- R¹: steht ganz besonders bevorzugt für C₁-C₈-Alkyl, C₂-C₄-Alkenyl, Methoxymethyl, Ethoxymethyl, Ethylmethylthio, Cyclopropyl, Cyclopentyl, Cyclohexyl oder
für gegebenenfalls durch Fluor, Chlor, Brom, Methyl, Methoxy, Trifluormethyl, Trifluormethoxy, Cyano oder Nitro substituiertes Phenyl,
für jeweils gegebenenfalls durch Chlor oder Methyl substituiertes Pyridyl oder Thienyl,
- R²: steht ganz besonders bevorzugt für C₁-C₈-Alkyl, C₂-C₄-Alkenyl, Methoxyethyl, Ethoxyethyl, Phenyl oder Benzyl,
- R⁶ und R⁷: stehen unabhängig voneinander ganz besonders bevorzugt für Methyl, Ethyl oder zusammen für einen C₅-Alkylenrest, in welchem die C₃-Methylengruppe durch Sauerstoff ersetzt ist.

Insbesondere bevorzugt sind Suspensionskonzentrate auf Ölbasis enthaltend Verbindungen der Formel (I")

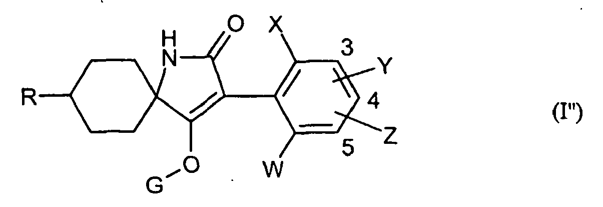

| **Beispiel-Nr.** | **W** | **X** | **Y** | **Z** | **R** | **G** | **Fp.°C** |
|---|---|---|---|---|---|---|---|
| I"-1 | H | Br | 5-CH₃ | H | OCH₃ | CO-i-C₃H₇ | 122 |
| I"-2 | H | Br | 5-CH₃ | H | OCH₃ | CO₂-C₂H₅ | 140 - 142 |
| I"-3 | H | CH₃ | 5-CH₃ | H | OCH₃ | H | > 220 |
| I"-4 | H | CH₃ | 5-CH₃ | H | OCH₃ | CO₂-C₂H₅ | 128 |
| I"-5 | CH₃ | CH₃ | 3-Br | H | OCH₃ | H | > 220 |
| I"-6 | CH₃ | CH₃ | 3-Cl | H | OCH₃ | H | 219 |
| I"-7 | H | Br | 4-CH₃ | 5-CH₃ | OCH₃ | CO-i-C₃H₇ | 217 |
| I"-8 | H | CH₃ | 4-Cl | 5-CH₃ | OCH₃ | CO₂C₂H₅ | 162 |
| I"-9 | CH₃ | CH₃ | 3-CH₃ | 4-CH₃ | OCH₃ | H | >220 |
| I"-10 | CH₃ | CH₃ | 3-Br | H | OC₂H₅ | CO-i-C₃H₇ | 212-214 |
| I"-11 | H | CH₃ | 4-CH₃ | 5-CH₃ | OC₂H₅ | CO-n-C₃H₇ | 134 |
| I"-12 | H | CH₃ | 4-CH₃ | 5-CH₃ | OC₂H₅ | CO-i-C₃H₇ | 108 |
| I"-13 | H | CH₃ | 4-CH₃ | 5-CH₃ | OC₂H₅ | CO-c-C₃H₅ | 163 |

Penetrationsförderer die das Eindringen von Verbindungen der Formel (I') in Pflanzen verbessern sind Alkanol-alkoxylate der Formel

CH₃-(CH₂)ₜ-CH₂-O-(-CH₂-CH₂-O-)ᵤ-H (Id)

in welcher
- t: für Zahlen von 9 bis 10,5 steht
und
- u: für Zahlen von 7 bis 9 steht.

Die Alkanol-Alkoxylate sind durch die obige Formel allgemein definiert. Bei diesen Substanzen handelt es sich um Gemische von Stoffen des angegebenen Typs mit unterschiedlichen Kettenlängen. Für die Indices errechnen sich deshalb Durchschnittswerte, die auch von ganzen Zahlen abweichen können.

### Beispielhaft genannt sei Alkanol-Alkoxylat der Formel (Id-1), in welcher

- t: für den Durchschnittswert 10,5 steht und
- u: für den Durchschnittswert 8,4 steht.

Die Alkanol-Alkoxylate der angegebenen Formeln sind bekannt und kommerziell unter den Handelsnamen: Genapol, Marlipal, Lutensol, Renex erhältlich.

### Die Verbindungen der Formel (I') sind bekannt:

Von 3-Acyl-pyrrolidin-2,4-dionen sind pharmazeutische Eigenschaften vorbeschrieben (S. Suzuki et al. Chem. Pharm. Bull. 15 1120 (1967)). Weiterhin wurden N-Phenylpyrrolidin-2,4-dione von R. Schmierer und H. Mildenberger (Liebigs Ann. Chem. 1985, 1095) synthetisiert.

In EP-A-0 262 399 und GB-A-2 266 888 werden ähnlich strukturierte Verbindungen (3-Arylpyrrolidin-2,4-dione) offenbart. Bekannt sind unsubstituierte, bicyclische 3-Aryl-pyrrolidin-2,4-dion-Derivate (EP-A-355 599, EP-A-415 211 und JP-A-12-053 670) sowie substituierte monocyclische 3-Aryl-pyrrolidin-2,4-dion-Derivate (EP-A-377 893 und EP-A-442 077).

Weiterhin bekannt sind polycyclische 3-Arylpyrrolidin-2,4-dion-Derivate (EP-A-442 073) sowie 1H-Arylpyrrolidin-dion-Derivate (EP-A-456 063, EP-A-521 334, EP-A-596 298, EP-A-613 884, EP-A-613 885, WO 94/01 997, WO 95/26 954, WO 95/20 572, EP-A-0 668 267, WO 96/25 395, WO 96/35 664, WO 97/01 535, WO 97/02 243, WO 97/36 868, WO 97/43275, WO 98/05638, WO 98/06721, WO 98/25928, WO 99/16748, WO 99/24437, WO 99/43649, WO 99/48869 und WO 99/55673, WO 01/17972, WO 01/23354, WO 01/74770, WO 04/024688, WO 04/007448, WO 04/080962 und WO 04/065366).

In WO03/000053 werden Penetrationsförderer enthaltende ölbasierte Suspensionskonzentrate von agrochemischen Wirkstoffen beschrieben.

In WO02/098230 wird die Verwendung von Fettalkoholethoxylaten als Penetrationsförderer für insektizide Neonicotinyle beschrieben.

Als Pflanzenöle kommen alle üblicherweise in agrochemischen Mitteln einsetzbaren, aus Pflanzen gewinnbaren Öle in Frage. Beispielhaft genannt seien Sonnenblumenöl, Rapsöl, Maisöl, Olivenöl und Sojabohnenöl.

Die erfindungsgemäßen Suspensionskonzentrate auf Ölbasis enthalten mindestens ein nicht-ionisches Tensid und/oder mindestens ein anionisches Tensid.

Als nicht-ionische Tenside kommen alle üblicherweise in agrochemischen Mitteln einsetzbaren Stoffe dieses Typs in Betracht. Vorzugsweise genannt seien Polyethylenoxid-polypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, wobei Sorbitolethoxylate beispielhaft genannt seien.

Als anionische Tenside kommen alle üblicherweise in agrochemischen Mitteln einsetzbaren Substanzen dieses Typs in Frage. Bevorzugt sind Alkalimetall- und Erdalkalimetall-Salze von Alkylsulfonsäuren oder Alkylarylsulfonsäuren.

Als Zusatzstoffe, die in den erfindungsgemäßen Formulierungen enthalten sein können, kommen Emulgatoren, Spreitmittel, schaumhemmende Mittel, Konservierungsmittel, Antioxydantien, Farbstoffe und inerte Füllmaterialien in Betracht. Als Spreitmittel kommen alle üblicherweise für diesen Zweck in agro-chemischen Mitteln einsetzbaren Substanzen in Betracht. Bevorzugt sind Alkylsiloxane.

Bevorzugte Emulgatoren sind ethoxylierte Nonylphenole, Umsetzungsprodukte von Alkylphenolen mit Ethylenoxid und/oder Propylenoxid, ethoxylierte Arylalkylphenole, weiterhin ethoxylierte und propoxylierte Arylalkylphenole, sowie sulfatierte oder phosphatierte Arylalkylethoxylate bzw. - ethoxy-propoxylate, wobei Sorbitan-Derivate, Polyethylenoxid-Sorbitan-Fettsäureester und Sorbitan-Fettsäureester, beispielhaft genannt seien.

Als schaumhemmende Stoffe kommen alle üblicherweise für diesen Zweck in agrochemischen Mitteln einsetzbaren Substanzen in Betracht. Bevorzugt sind Silikonöle und Magnesiumstearat.

Als Konservierungsmittel kommen alle üblicherweise für diesen Zweck in agrochemischen Mitteln dieses Typs einsetzbaren Substanzen in Frage. Als Beispiele genannt seien Preventol® (Fa. Bayer AG) und Proxel®.

Als Antioxydantien kommen alle üblicherweise für diesen Zweck in agrochemischen Mitteln einsetzbaren Substanzen in Betracht. Bevorzugt ist 2,6-Di-tert-butyl-4-methylphenol.

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

Als inerte Füllmaterialien kommen alle üblicherweise für diesen Zweck in agrochemischen Mitteln einsetzbaren Substanzen in Betracht, die nicht als Verdickungsmittel fungieren. Bevorzugt sind anorganische Partikel, wie Carbonate, Silikate und Oxide, sowie auch organische Substanzen, wie Harnstoff-Formaldehyd-Kondensate. Beispielhaft erwähnt seien Kaolin, Rutil, Siliciumdioxid, sogenannte hochdisperse Kieselsäure, Kieselgele, sowie natürliche und synthetische Silikate, außerdem Talkum.

Der Gehalt an den einzelnen Komponenten kann in den erfindungsgemäßen Suspensionskonzentraten auf Ölbasis innerhalb eines größeren Bereiches variiert werden. So liegen die Konzentrationen
- an Verbindung der Formel (I') im allgemeinen zwischen 5 und 30 Gew.-%, vorzugsweise zwischen 10 und 25 Gew.-%,
- an Penetrationsförderer der Formel (Id) im allgemeinen zwischen 5 und 30 Gew.-%, vorzugsweise zwischen 15 und 25 Gew.-%,
- an Pflanzenöl im allgemeinen zwischen 20 und 55 Gew.-%, vorzugsweise zwischen 25 und 50 Gew.-%,
- an Tensiden im allgemeinen zwischen 2,5 und 30 Gew.-%, vorzugsweise zwischen 5,0 und 25 Gew.-% und
- an Zusatzstoffen im allgemeinen zwischen 0 und 25 Gew.-%, vorzugsweise zwischen 0 und 20 Gew.-%.

Die Herstellung der erfindungsgemäßen Suspensionskonzentrate auf Ölbasis erfolgt in der Weise, dass man die Komponenten in den jeweils gewünschten Verhältnissen miteinander vermischt. Die Reihenfolge, in der die Bestandteile miteinander vermengt werden, ist beliebig. Zweckmäßigerweise setzt man die festen Komponenten in feingemahlenem Zustand ein. Es ist aber auch möglich, die nach dem Vermengen der Bestandteile entstehende Suspension zunächst einer Grob- und dann einer Feinmahlung zu unterziehen, so dass die mittlere Teilchengröße unterhalb von 20 µm liegt. Bevorzugt sind Suspensionskonzentrate, in denen die festen Partikel eine mittlere Teilchengröße zwischen 1 und 10 µm aufweisen.

Die Temperaturen können bei der Durchführung des erfindungsgemäßen Verfahrens in einem bestimmten Bereich variiert werden. Man arbeitet im allgemeinen bei Temperaturen zwischen 10°C und 60°C, vorzugsweise zwischen 15°C und 40°C. Zur Durchführung des erfindungsgemäßen Verfahrens kommen übliche Misch- und Mahlgeräte in Betracht, die zur Herstellung von agrochemischen Formulierungen eingesetzt werden.

Bei den erfindungsgemäßen Suspensionskonzentraten auf Ölbasis handelt es sich um Formulierungen, die auch nach längerer Lagerung bei erhöhten Temperaturen oder in der Kälte stabil bleiben, da kein Kristallwachstum beobachtet wird. Sie lassen sich durch Verdünnen mit Wasser in homogene Spritzflüssigkeiten überführen. Die Anwendung dieser Spritzflüssigkeiten erfolgt nach üblichen Methoden, also zum Beispiel durch Verspritzen, Gießen oder Injizieren.

Die Aufwandmenge an den erfindungsgemäßen Suspensionskonzentraten auf Ölbasis kann innerhalb eines größeren Bereiches variiert werden. Sie richtet sich nach den jeweiligen agrochemischen Wirkstoffen und nach deren Gehalt in den Formulierungen.

Mit Hilfe der erfindungsgemäßen Suspensionskonzentrate auf Ölbasis lassen sich agrochemische Wirkstoffe in besonders vorteilhafter Weise auf Pflanzen und/oder deren Lebensraum ausbringen. Die enthaltenen agrochemischen Wirkstoffe entfalten dabei eine bessere biologische Wirksamkeit (insbesondere eine bessere insektizide Wirkung und/oder eine bessere Kulturpflanzenverträglichkeit) als bei Applikation in Form der entsprechenden herkömmlichen Formulierungen.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Suspensionskonzentraten erfolgt direkt oder durch Einwirkung auf deren Umgebung, Lebensraum oder Lagerraum nach den üblichen Behandlungsmethoden, z.B. durch Tauchen, Sprühen, Spritzen, Verdampfen, Vernebeln, Aufstreichen und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps, Rüben, Zuckerrohr sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im Folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylhamstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft mit den erfindungsgemäßen Suspensionskonzentraten behandelt werden. Die bei den Suspensionskonzentraten oben angegebenen Vorzugsbereiche gelten auch für die Behandlung dieser Pflanzen. Besonders hervorgehoben sei die Pflanzenbehandlung mit den im vorliegenden Text speziell aufgeführten Suspensionskonzentraten.

Die Erfindung wird durch die folgenden Beispiele veranschaulicht.

### Beispiele

### Herstellungsbeispiele

### Beispiel I

Zur Herstellung eines Suspensionskonzentrates werden

| | |
|---|---|
| 100,0 g | der Verbindung der Formel (I"-4) |
| 100,0 g | Polyoxyethylen-sorbitol-oleat |
| 70,0 g | eines Gemisches aus Polyalkoxylierten Alkoholen (Atlox 4894) |
| 30,0 g | Ligninsulfonat (Borresperse NA) |
| 0,5 g | Polydimethylsiloxan |
| 2,0 g | wasserfreie Zitronensäure |
| 2,0 g | 2-6-Di-tert-butyl-4-methylphenol |

unter Rühren bei Raumtemperatur in ein Gemisch aus

| | |
|---|---|
| 250,0 g | der Verbindung der Formel (I-d-l) und |
| 450,0 g | Sonnenblumenöl |

gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Vergleichsbeispiel I

Zur Herstellung eines Suspensionkonzentrates werden

| | |
|---|---|
| 100 g | der Verbindung (1"-4) |
| 100 g | Polyoxyethylen-sorbitol-oleat |
| 80 g | eines Gemisches aus Poly-alkoxylierten Alkoholen (Atlox 4894) |
| 20 g | Ligninsulfonat (Borresperse NA) |
| 0,5 g | Polydimethylsiloxan |
| 2,0 g | wasserfreie Zitronensäure |
| 2,0 g | 2-6-Di-tert-butyl-4-methylphenol |

unter Rühren bei Raumtemperatur in ein Gemisch aus

| | |
|---|---|
| 250 g | der Verbindung RO (EO)₈ (PO)₄-H |

in welcher
R für geradkettiges oder verzweigtes Alkyl mit 12 bis 15 Kohlenstoffatomen steht,
EO für CH₂-CH₂-O steht und
PO für 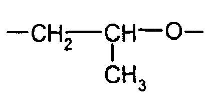 steht, und

| | |
|---|---|
| 450,0 g | Sonnenblumenöl |

gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Vergleichsbeispiel II

Zur Herstellung eines Suspensionkonzentrates werden

| | |
|---|---|
| 100 g | der Verbindung (I"-4) |
| 100 g | Polyoxyethylen-sorbitol-oleat |
| 80 g | eines Gemisches aus Poly-alkoxylierten Alkoholen (Atlox 4894) |
| 20 g | Ligninsulfonat (Borresperse NA) |
| 0,5 g | Polydimethylsiloxan |
| 2,0 g | wasserfreie Zitronensäure |
| 2,0 g | 2-6-Di-tert-butyl-4-methylphenol |

unter Rühren bei Raumtemperatur in ein Gemisch aus

| | |
|---|---|
| 250 g | der Verbindung C₁₃H₂₇-O-(EO)₁₀-H |

in welcher
- EO: für CH₂-CH₂-O steht und

| | |
|---|---|
| 450,0 g | Sonnenblumenöl |

gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Prüfung von OD-Formulierungen auf Pflanzenverträglichkeit

Buschbohner<pflanzen (*Phaseolus vulgaris*)*,* Gurkenpflanzen (*Cucumis sativus*) und Sojapflanzen (*Glycine max*) werden im 1 bis 2 Blattstadium mit einer Tropfnasspritzung behandelt, wobei die Spritzbrühe auf die Blattoberseite mit einer Wirkstoffkonzentration von 400 ppm appliziert wird. Es werden mindestens 2 Replikate angesetzt. Nach der gewünschten Zeit wird die Pflanzenschädigung in % bestimmt. Dabei bedeutet 100 %, dass die Pflanze komplett abgestorben ist, 0 % bedeutet, dass die Pflanze im Vergleich zur unbehandelten Kontrolle nicht geschädigt ist.

### Ergebnisse aus Gewächshausversuchen mit 100-OD-Formulierungen auf Pflanzenverträglichkeit.

**Tabelle 1 Schädigung des Neuzuwachses in %; 7 d nach Applikation**

| | Buschbohne | Gurke | Soja |
|---|---|---|---|
| Beispiel I | 0 | 5 | 0 |
| Vergleichsbeispiel I | 0 | 40 | 10 |

**Tabelle 2 Schädigung des Neuzuwachses in %; 14 d nach Applikation**

| | Buschbohne | Gurke | Soja |
|---|---|---|---|
| Beispiel 1 | 0 | 0 | 0 |
| Vergleichsbeispiel I | 5 | 50 | 5 |

**Tabelle 3 Schädigung des Neuzuwachses in %; 7 d nach Applikation**

| | Buschbohne | Gurke | Soja |
|---|---|---|---|
| Beispiel I | 0 | 5 | 0 |
| Vergleichsbeispiel II | 10 | 40 | 0 |

**Tabelle 4 Schädigung des Neuzuwachses in %; 14 d nach Applikation**

| | Buschbohne | Gurke | Soja |
|---|---|---|---|
| Beispiel I | 0 | 0 | 0 |
| Vergleichsbeispiel II | 20 | 70 | 10 |

### Prüfung von OD-Formulierungen auf biologische Wirksamkeit

Baumwolle und Kohlpflanzen im 2 Blattstadium, jeweils mit *Aphis gossypii* (APHIGO) und *Myzus persicae* (MYZUPE) infiziert, werden mit der Wirkstofflösung behandelt (Mengenangaben siehe Tabelle). Dabei beträgt die Wasseraufwandmenge umgerechnet 300 1/ha. Die Kohlpflanzen werden im Gewächshaus bei 20 °C und die Baumwollpflanzen bei 25 °C inkubiert. Nach der gewünschten Zeit wird die Wirksamkeit im Vergleich zur unbehandelten Kontrolle evaluiert.

**Tabelle 5**

| 5 d nach Applikation | | | | | | |
|---|---|---|---|---|---|---|
| Konzentration | Baumwolle (APHIGO) | | | Kohl (MYZUPE) | | |
| | Beispiel 1 | Vergleichsbeispiel I | Vergleichsbeispiel II | Beispiel I | Vergleichsbeispiel 1 | Vergleichsbeispiel II |
| 4,8 g Wirkstoff/ha | 93 | 70 | 77 | 83 | 70 | 53 |

## Patentansprüche

1. Suspensionskonzentrate auf Ölbasis, bestehend aus
- mindestens einer bei Raumtemperatur festen Verbindung der Formel (I') 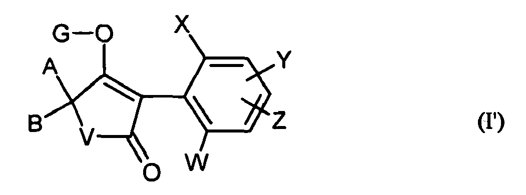 in welcher
V für N-D steht,
X für Halogen, Alkyl, Alkoxy, Halogenalkyl, Halogenalkoxy oder Cyano steht,
W, Y und Z unabhängig voneinander für Wasserstoff, Halogen, Alkyl, Alkoxy, Halogenalkyl, Halogenalkoxy oder Cyano stehen,
A für Wasserstoff, jeweils gegebenenfalls durch Halogen substituiertes Alkyl, Alkoxyalkyl, gesättigtes, gegebenenfalls substituiertes Cycloalkyl steht, in welchem gegebenenfalls mindestens ein Ringatom durch ein Heteroatom ersetzt ist,
B für Wasserstoff oder Alkyl steht,
A und B gemeinsam mit dem Kohlenstoffatom an das sie gebunden sind, für einen gesättigten oder ungesättigten, gegebenenfalls mindestens ein Heteroatom enthaltenden unsubstituierten oder substituierten Cyclus stehen,
D für Wasserstoff oder einen gegebenenfalls substituierten Rest aus der Reihe Alkyl, Alkenyl, Alkoxyalkyl, gesättigtes Cycloalkyl steht, in welchem gegebenenfalls eines oder mehrere Ringglieder durch Heteroatome ersetzt sind,
A und D gemeinsam mit den Atomen an die sie gebunden sind für einen gesättigten oder ungesättigten und gegebenenfalls mindestens ein Heteroatom enthaltenden, im A,D-Teil unsubstituierten oder substituierten Cyclus stehen,
G für Wasserstoff (a) oder für eine der Gruppen 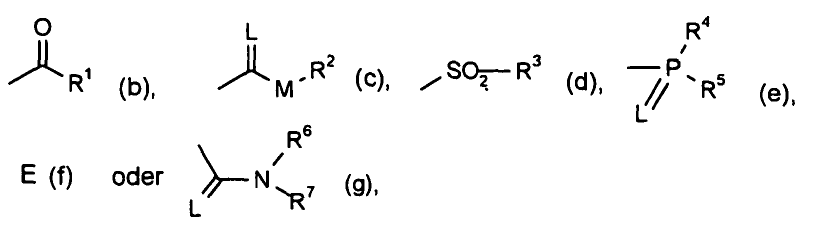 steht,
worin
E für ein Metallion oder ein Ammoniumion steht,
L für Sauerstoff oder Schwefel steht,
M für Sauerstoff oder Schwefel steht,
R¹ für jeweils gegebenenfalls durch Halogen substituiertes Alkyl, Alkenyl, Alkoxyalkyl, Alkylthioalkyl, Polyalkoxyalkyl oder gegebenenfalls durch Halogen, Alkyl oder Alkoxy substituiertes Cycloalkyl, das durch mindestens ein Heteroatom unterbrochen sein kann, jeweils gegebenenfalls substituiertes Phenyl, Phenylalkyl, Hetaryl, Phenoxyalkyl oder Hetaryloxyalkyl steht,
R² für jeweils gegebenenfalls durch Halogen substituiertes Alkyl, Alkenyl, Alkoxyalkyl, Polyalkoxyalkyl oder für jeweils gegebenenfalls substituiertes Cycloalkyl, Phenyl oder Benzyl steht,
R³ für gegebenenfalls durch Halogen substituiertes Alkyl oder gegebenenfalls substituiertes Phenyl steht,
R⁴ und R⁵ unabhängig voneinander für jeweils gegebenenfalls durch Halogen substituiertes Alkyl, Alkoxy, Alkylamino, Dialkylamino, Alkylthio, Alkenylthio, Cycloalkylthio oder für jeweils gegebenenfalls substituiertes Phenyl, Benzyl, Phenoxy oder Phenylthio stehen und
R⁶ und R⁷ unabhängig voneinander für Wasserstoff, jeweils gegebenenfalls durch Halogen substituiertes Alkyl, Cycloalkyl, Alkenyl, Alkoxy, Alkoxyalkyl, für gegebenenfalls substituiertes Phenyl, für gegebenenfalls substituiertes Benzyl oder gemeinsam mit dem N-Atom, an das sie gebunden sind, für einen gegebenenfalls durch Sauerstoff oder Schwefel unterbrochenen gegebenenfalls substituiertes Ring stehen und
- mindestens einem Penetrationsförderer der Formel (Id)
CH₃-(CH₂)ₜ-CH₂-O-(-CH₂-CH₂-O-)ᵤ-H (Id)
in welcher
t für Zahlen von 9 bis 10,5 steht
und
u für Zahlen von 7 bis 9 steht,
- mindestens einem Pflanzenöl,
- mindestens einem nicht-ionischen Tensid und/oder mindestens einem anionischen Tensid und
- gegebenenfalls einem oder mehreren Zusatzstoffen aus den Gruppen der Emulgiermittel, der schaumhemmenden Mittel, der Konservierungsmittel, der Antioxydantien, der Farbstoffe und/oder der inerten Füllmaterialien.

2. Suspensionskonzentrate gemäß Anspruch 1 enthaltend Verbindungen der Formel (I'), in welcher
V für N-D steht,
W für Wasserstoff, C₁-C₄-Alkyl, C₁-C₄-Alkoxy, Chlor, Brom oder Fluor steht,
X für C₁-C₄-Alkyl, C₁-C₄-Alkoxy, C₁-C₄-Halgenalkyl, Fluor, Chlor oder Brom steht,
Y und Z unabhängig voneinander für Wasserstoff, C₁-C₄-Alkyl, Halogen, C₁-C₄-Alkoxy oder C ₁-C₄-Halogenalkyl stehen,
A für Wasserstoff oder jeweils gegebenenfalls durch Halogen substituiertes C₁-C₆-Alkyl oder C₃-C₈-Cycloalkyl steht,
B für Wasserstoff, Methyl oder Ethyl steht,
A, B und das Kohlenstoffatom an das sie gebunden sind, für gesättigtes C₃-C₆-Cycloalkyl stehen, worin gegebenenfalls ein Ringglied durch Sauerstoff oder Schwefel ersetzt ist und welches gegebenenfalls einfach oder zweifach durch C₁-C₄-Alkyl, Trifluormethyl oder C₁-C₄-Alkoxy substituiert ist,
D für Wasserstoff, jeweils gegebenenfalls durch Fluor oder Chlor substituiertes C₁-C₆-Alkyl, C₃-C₄-Alkenyl oder C₃-C₆-Cycloalkyl steht,
A und D gemeinsam für jeweils gegebenenfalls durch Methyl substituiertes C₃-C₄-Alkandiyl stehen, worin gegebenenfalls eine Methylengruppe durch Schwefel ersetzt ist,
G für Wasserstoff (a) oder für eine der Gruppen 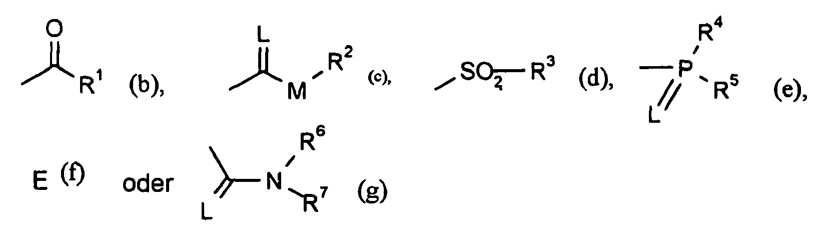 steht,
in welchen
E für ein Metallion oder ein Ammoniumion steht,
L für Sauerstoff oder Schwefel steht und
M für Sauerstoff oder Schwefel steht,
R¹ für jeweils gegebenenfalls durch Halogen substituiertes C₁-C₁₀-Alkyl, C₂-C₁₀-Alkenyl, C₁-C₄-Alkoxy-C₁-C₄-alkyl, C₁-C₄-Alkylthio-C₁-C₄-alkyl oder gegebenenfalls durch Fluor, Chlor, C₁C₄-Alkyl oder C₁-C₂-Alkoxy substituiertes C₃-C₆-Cycloalkyl,
für gegebenenfalls durch Fluor, Chlor, Brom, Cyano, Nitro, C₁-C₄-Alkyl, C₁-C₄-Alkoxy, Trifluormethyl oder Trifluormethoxy substituiertes Phenyl,
für jeweils gegebenenfalls durch Chlor oder Methyl substituiertes Pyridyl oder Thienyl steht,
R² für jeweils gegebenenfalls durch Fluor oder Chlor substituiertes C₁-C₁₀-Alkyl, C₂-C₁₀-Alkenyl, C₁-C₄-Alkoxy-C₂-C₄-alkyl, für gegebenenfalls durch Methyl oder Methoxy substituiertes C₅-C₆-Cycloalkyl oder
für jeweils gegebenenfalls durch Fluor, Chlor, Brom, Cyano, Nitro, C₁-C₄-Alkyl, C₁-C₄-Alkoxy, Trifluormethyl oder Trifluormethoxy substituiertes Phenyl oder Benzyl steht,
R³ für gegebenenfalls durch Fluor substituiertes C₁-C₄-Alkyl oder für gegebenenfalls durch Fluor, Chlor, Brom, C₁-C₄-Alkyl, C₁-C₄-Alkoxy, Trifluormethyl, Trifluormethoxy, Cyano oder Nitro substituiertes Phenyl steht,
R⁴ für jeweils gegebenenfalls durch Fluor oder Chlor substituiertes C₁-C₄-Alkyl, C₁-C₄-Alkoxy, C₁-C₄-Alkylamino, C₁-C₄-Alkylthio oder für jeweils gegebenenfalls durch Fluor, Chlor, Brom, Nitro, Cyano, C₁-C₄-Alkoxy, Trifluormethoxy, C₁-C₄-Alkylthio, C₁-C₄-Halogenalkylthio, C₁-C₄-Alkyl oder Trifluormethyl substituiertes Phenyl, Phenoxy oder Phenylthio steht,
R⁵ für C₁-C₄-Alkoxy oder C₁-C₄-Thioalkyl steht,
R⁶ für C₁-C₆-Alkyl, C₃-C₆-Cycloalkyl, C₁-C₆-Alkoxy, C₃-C₆-Akenyl, C₁-C₄-Alkoxy-C₁-C₄-alkyl steht,
R⁷ für C₁-C₆-Alkyl, C₃-C₆-Alkenyl oder C₁-C₄-Alkoxy-C₁-C₄-alkyl steht,
R⁶ und R⁷ zusammen für einen gegebenenfalls durch Methyl oder Ethyl substituierten C₃-C₆-Alkylenrest stehen, in welchem gegebenenfalls ein Kohlenstoffatom durch Sauerstoff oder Schwefel ersetzt ist.

3. Suspensionskonzentrate gemäß Anspruch 1 enthaltend Verbindungen der Formel (I'), in welcher
V für N-D steht,
W für Wasserstoff, Methyl, Ethyl, Chlor, Brom oder Methoxy steht,
X für Chlor, Brom, Methyl, Ethyl, Propyl, i-Propyl, Methoxy, Ethoxy oder Trifluormethyl steht,
Y und Z unabhängig voneinander für Wasserstoff, Fluor, Chlor, Brom, Methyl, Ethyl, Propyl, i-Propyl, Trifluormethyl oder Methoxy stehen,
A für Methyl, Ethyl, Propyl, i-Propyl, Butyl, i-Butyl, sec.-Butyl, tert.-Butyl, Cyclopropyl, Cyclopentyl oder Cyclohexyl steht,
B für Wasserstoff, Methyl oder Ethyl steht,
A, B und das Kohlenstoffatom an das sie gebunden sind, für gesättigtes C₆-Cycloalkyl stehen, worin gegebenenfalls ein Ringglied durch Sauerstoff ersetzt ist und welches gegebenenfalls einfach durch Methyl, Ethyl, Trifluormethyl, Methoxy, Ethoxy, Propoxy oder Butoxy substituiert ist,
D für Wasserstoff, für Methyl, Ethyl, Propyl, i-Propyl, Butyl, i-Butyl, Allyl, Cyclopropyl, Cyclopentyl oder Cyclohexyl steht,
A und D gemeinsam für gegebenenfalls durch Methyl substituiertes C₃-C₄-Alkandiyl stehen,
G für Wasserstoff (a) oder für eine der Gruppen 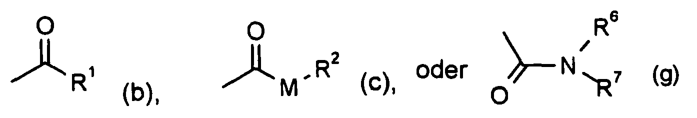 steht,
in welchen
M für Sauerstoff oder Schwefel steht,
R¹ für C₁-C₈-Alkyl, C₂-C₄-Alkenyl, Methoxymethyl, Ethoxymethyl, Ethylthiomethyl, Cyclopropyl, Cyclopentyl oder Cyclohexyl,
für gegebenenfalls durch Fluor, Chlor, Brom, Cyano, Nitro, Methyl, Ethyl, Methoxy, Trifluormethyl oder Trifluormethoxy substituiertes Phenyl,
für jeweils gegebenenfalls durch Chlor oder Methyl substituiertes Pyridyl oder Thienyl steht,
R² für C₁-C₈-Alkyl, C₂-C₄-Alkenyl, Methoxyethyl, Ethoxyethyl oder für Phenyl oder Benzyl steht,
R⁶ und R⁷ unabhängig voneinander für Methyl, Ethyl oder zusammen für einen C₅-Alkylenrest stehen, in welchem die C₃-Methylengruppe durch Sauerstoff ersetzt ist.

4. Suspensionskonzentrate gemäß Anspruch 1 enthaltend Verbindungen der Formel (I'), in welcher
V für N-D steht,
W für Wasserstoff oder Methyl steht,
X für Chlor, Brom oder Methyl steht,
Y und Z unabhängig voneinander für Wasserstoff, Chlor, Brom oder Methyl stehen,
A, B und das Kohlenstoffatom an das sie gebunden sind, für gesättigtes C₆-Cycloalkyl stehen, in welchem gegebenenfalls ein Ringglied durch Sauerstoff ersetzt ist und welches gegebenenfalls einfach durch Methyl, Trifluormethyl, Methoxy, Ethoxy, Propoxy oder Butoxy substituiert ist,
D für Wasserstoff steht,
G für Wasserstoff (a) oder für eine der Gruppen 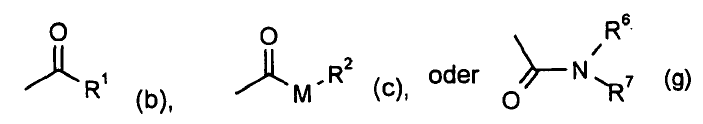 steht,
in welchen
M für Sauerstoff oder Schwefel steht,
R¹ für C₁-C₈-Alkyl, C₂-C₄-Alkenyl, Methoxymethyl, Ethoxymethyl, Ethylmethylthio, Cyclopropyl, Cyclopentyl, Cyclohexyl oder
für gegebenenfalls durch Fluor, Chlor, Brom, Methyl, Methoxy, Trifluormethyl, Trifluormethoxy, Cyano oder Nitro substituiertes Phenyl,
für jeweils gegebenenfalls durch Chlor oder Methyl substituiertes Pyridyl oder Thienyl steht,
R² für C₁-C₈-Alkyl, C₂-C₄-Alkenyl, Methoxyethyl, Ethoxyethyl, Phenyl oder Benzyl steht,
R⁶ und R⁷ unabhängig voneinander für Methyl, Ethyl oder zusammen für einen C₅-Alkylenrest stehen, in welchem die C₃-Methylengruppe durch Sauerstoff ersetzt ist.

5. Suspensionskonzentrate gemäß Anspruch 1 enthaltend Verbindungen der Formel (I'), in welcher
V für N-H steht, und
A und B gemeinsam mit dem Kohlenstoffatom an das die gebunden sind für einen substituierten sechsgliedrigen Ring 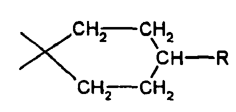 stehen, und die Substituenten W, X, Y, Z, G und R die in der Tabelle angegebenen Definitionen haben
| **W** | **X** | **Y** | **Z** | **R** | **G** |
|---|---|---|---|---|---|
| H | Br | 5-CH₃ | H | OCH₃ | CO-i-C₃H₇ |
| H | Br | 5-CH₃ | H | OCH₃ | CO₂-C₂H₅ |
| H | CH₃ | 5-CH₃ | H | OCH₃ | H |
| H | CH₃ | 5-CH₃ | H | OCH₃ | CO₂-C₂H₅ |
| CH₃ | CH₃ | 3-Br | H | OCH₃ | H |
| CH₃ | CH₃ | 3-Cl | H | OCH₃ | H |
| H | Br | 4-CH₃ | 5-CH₃ | OCH₃ | CO-i-C₃H₇ |
| H | CH₃ | 4-Cl | 5-CH₃ | OCH₃ | CO₂C₂H₅ |
| CH₃ | CH₃ | 3-CH₃ | 4-CH₃ | OCH₃ | H |
| CH₃ | CH₃ | 3-Br | H | OC₂H₅ | CO-i-C₃H₇ |
| H | CH₃ | 4-CH₃ | 5-CH₃ | OC₂H₅ | CO-n- C₃H₇ |
| H | CH₃ | 4-CH₃ | 5-CH₃ | OC₂H₅ | CO-i- C₃H₇ |
| H | CH₃ | 4-CH₃ | 5-CH₃ | OC₂H₅ | CO-c- C₃H₅ |

6. Verfahren zur Herstellung von Suspensionskonzentraten gemäß Anspruch 1, **dadurch gekennzeichnet, dass** man
- mindestens eine bei Raumtemperatur feste Verbindung der Formel (I'),
- mindestens einen Penetrationsförderer,
- mindestens ein Pflanzenöl,
- mindestens ein nicht-ionisches Tensid und/oder mindestens ein anionisches Tensid und
- gegebenenfalls einen oder mehrere Zusatzstoffe aus den Gruppen der Emulgiermittel, der schaumhemmenden Mittel, der Konservierungsmittel, der Antioxydantien, der Farbstoffe und/oder der inerten Füllmaterialien miteinander vermischt und die entstehende Suspension gegebenenfalls anschließend mahlt.

7. Suspensionskonzentrate gemäß Anspruch 1, **dadurch gekennzeichnet, dass** als Penetrationsförderer mindestens ein Alkanol-Alkoxylat der Formel (Id) enthalten ist, in welcher
t für den Durchschnittswert 10,5 steht und
u für den Durchschnittswert 8,4 steht.

8. Suspensionskonzentrate gemäß Anspruch 1, **dadurch gekennzeichnet, dass** der Gehalt
- an Verbindung der Formel (I') zwischen 5 und 30 Gew.-%,
- an Penetrationsförderern zwischen 5 und 30 Gew.-%,
- an Pflanzenöl zwischen 20 und 55 Gew.-%,
- an Tensiden zwischen 2,5 und 30 Gew.%,
- an Zusatzstoffen zwischen 0 und 25 Gew.-% liegt.

9. Verwendung von Suspensionskonzentraten gemäß Anspruch 1 zur Applikation der enthaltenen Verbindungen der Formel (I') auf Pflanzen und/oder deren Lebensraum.

10. Verwendung von Suspensionskonzentraten gemäß Anspruch 1 zur Bekämpfung von Insekten.

11. Mittel, **gekennzeichnet durch** einen Gehalt an einem Suspensionskonzentrat gemäß Anspruch 1 und Streckmittel und/oder oberflächenaktiven Reagenzien.

## Claims

1. Oil-based suspension concentrates composed of
- at least one room-temperature-solid compound of the formula (I') 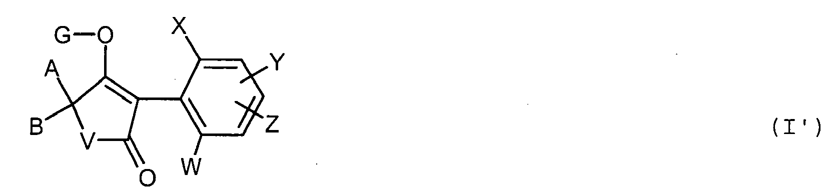 in which
V is N-D,
X is halogen, alkyl, alkoxy, haloalkyl, haloalkoxy or cyano,
W, Y and Z independently of one another are hydrogen, halogen, alkyl, alkoxy, haloalkyl, haloalkoxy or cyano,
A is hydrogen, in each case optionally halogen-substituted alkyl, alkoxyalkyl, saturated, optionally substituted cycloalkyl, in which optionally at least one ring atom is replaced by a heteroatom,
B is hydrogen or alkyl,
A and B together with the carbon atom to which they are attached are a saturated or unsaturated, unsubstituted or substituted ring optionally including at least one heteroatom,
D is hydrogen or an optionally substituted radical from the series alkyl, alkenyl, alkoxyalkyl, saturated cycloalkyl, in which optionally one or more ring members are replaced by heteroatoms,
A and D together with the atoms to which they are attached are a saturated or unsaturated ring which optionally includes at least one heteroatom and is unsubstituted or substituted in the A,D moiety,
G is hydrogen (a) or is one of the groups 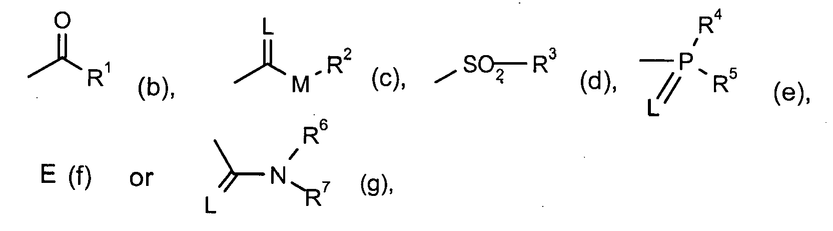 in which
E is a metal ion or an ammonium ion,
L is oxygen or sulphur,
M is oxygen or sulphur,
R¹ is in each case optionally halogen-substituted alkyl, alkenyl, alkoxyalkyl, alkylthioalkyl, polyalkoxyalkyl or optionally halogen-, alkyl- or alkoxy-substituted cycloalkyl which may be interrupted by at least one heteroatom, or in each case optionally substituted phenyl, phenylalkyl, hetaryl, phenoxyalkyl or hetaryloxyalkyl,
R² is in each case optionally halogen-substituted alkyl, alkenyl, alkoxyalkyl, polyalkoxyalkyl or is in each case optionally substituted cycloalkyl, phenyl or benzyl,
R³ is optionally halogen-substituted alkyl or optionally substituted phenyl,
R⁴ and R⁵ independently of one another are in each case optionally halogen-substituted alkyl, alkoxy, alkylamino, dialkylamino, alkylthio, alkenylthio, cycloalkylthio or are in each case optionally substituted phenyl, benzyl, phenoxy or phenylthio, and
R⁶ and R⁷ independently of one another are hydrogen, in each case optionally halogen-substituted alkyl, cycloalkyl, alkenyl, alkoxy, alkoxyalkyl, are optionally substituted phenyl, are optionally substituted benzyl or together with the nitrogen atom to which they are attached are an optionally oxygen- or sulphur-interrupted optionally substituted ring, and
- at least one penetrant of the formula (Id)
CH₃-(CH₂)ₜ-CH₂-O-(-CH₂-CH₂-O-)ᵤ-H (Id)
in which
t stands for numbers from 9 to 10.5
and
u stands for numbers from 7 to 9,
- at least one vegetable oil,
- at least one nonionic surfactant and/or at least one anionic surfactant, and
- optionally one or more additives from the groups of the emulsifiers, foam inhibitors, preservatives, antioxidants, colorants and/or inert filler materials.

2. Suspension concentrates according to Claim 1, comprising compounds of the formula (I') in which
V is N-D,
W is hydrogen, C₁-C₄-alkyl, C₁-C₄-alkoxy, chlorine, bromine or fluorine,
X is C₁-C₄-alkyl, C₁-C₄-alkoxy, C₁-C₄-haloalkyl, fluorine, chlorine or bromine,
Y and Z are independently of one another hydrogen, C₁-C₄-alkyl, halogen, C₁-C₄-alkoxy or C₁-C₄-haloalkyl,
A is hydrogen or in each case optionally halogen-substituted C₁-C₆-alkyl or C₃-C₈-cycloalkyl,
B is hydrogen, methyl or ethyl,
A, B and the carbon atom to which they are attached are saturated C₃-C₆-cycloalkyl, in which optionally a ring member is replaced by oxygen or sulphur, and which is optionally mono- or disubstituted by C₁-C₄-alkyl, trifluoromethyl or C₁-C₄-alkoxy,
D is hydrogen, in each case optionally fluorine- or chlorine-substituted C₁-C₆-alkyl, C₃-C₄-alkenyl or C₃-C₆-cycloalkyl,
A and D are together in each case optionally methyl-substituted C₃-C₄-alkanediyl, in which optionally a methylene group is replaced by sulphur,
G is hydrogen (a) or is one of the groups 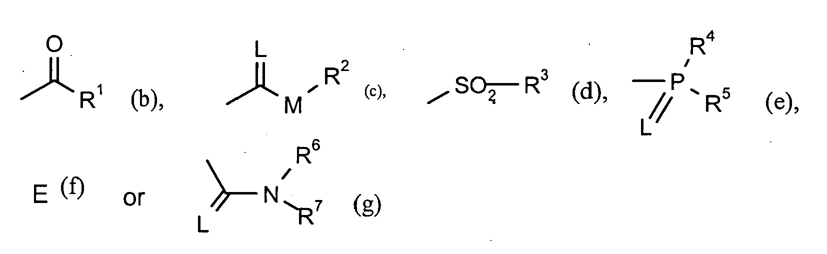 in which
E is a metal ion or an ammonium ion,
L is oxygen or sulphur and
M is oxygen or sulphur,
R¹ is in each case optionally halogen-substituted C₁-C₁₀-alkyl, C₂-C₁₀-alkenyl, C₁-C₄-alkoxy-C₁-C₄-alkyl, C₁-C₄-alkylthio-C₁-C₄-alkyl or optionally fluorine-, chlorine-, C₁-C₄-alkyl- or C₁-C₂-alkoxy-substituted C₃-C₆-cycloalkyl,
is optionally fluorine-, chlorine-, bromine-, cyano-, nitro-, C₁-C₄-alkyl-, C₁-C₄-alkoxy-, trifluoromethyl- or trifluoromethoxy-substituted phenyl,
is in each case optionally chlorine- or methyl-substituted pyridyl or thienyl,
R² is in each case optionally fluorine- or chlorine-substituted C₁-C₁₀-alkyl, C₂-C₁₀-alkenyl, C₁-C₄-alkoxy-C₂-C₄-alkyl,
is optionally methyl- or methoxy-substituted C₅-C₆-cycloalkyl or
is in each case optionally fluorine-, chlorine-, bromine-, cyano-, nitro-, C₁-C₄-alkyl-, C₁-C₄-alkoxy-, trifluoromethyl- or trifluoromethoxy-substituted phenyl or benzyl,
R³ is optionally fluorine-substituted C₁-C₄-alkyl or is optionally fluorine-, chlorine-, bromine-, C₁-C₄-alkyl, C₁-C₄-alkoxy, trifluoromethyl-, trifluoromethoxy-, cyano- or nitro-substituted phenyl,
R⁴ is in each case optionally fluorine- or chlorine-substituted C₁-C₄-alkyl, C₁-C₄-alkoxy, C₁-C₄-alkylamino, C₁-C₄-alkylthio or is in each case optionally fluorine-, chlorine-, bromine-, nitro-, cyano-, C₁-C₄-alkoxy-, trifluoromethoxy-, C₁-C₄-alkylthio-, C₁-C₄-haloalkylthio-, C₁-C₄-alkyl- or trifluoromethyl-substituted phenyl, phenoxy or phenylthio,
R⁵ is C₁-C₄-alkoxy or C₁-C₄-thioalkyl,
R⁶ is C₁-C₆-alkyl, C₃-C₆-cycloalkyl, C₁-C₆-alkoxy, C₃-C₆-alkenyl, C₁-C₄₋alkoxy-C₁-C₄-alkyl,
R⁷ is C₁-C₆-alkyl, C₃-C₆-alkenyl or C₁-C₄-alkoxy-C₁-C₄-alkyl,
R⁶ and R⁷ together are an optionally methyl- or ethyl-substituted C₃-C₆-alkylene radical, in which optionally a carbon atom is replaced by oxygen or sulphur.

3. Suspension concentrates according to Claim 1, comprising compounds of the formula (I'), in which
V is N-D,
W is hydrogen, methyl, ethyl, chlorine, bromine or methoxy,
X is chlorine, bromine, methyl, ethyl, propyl, isopropyl, methoxy, ethoxy or trifluoromethyl,
Y and Z are independently of one another hydrogen, fluorine, chlorine, bromine, methyl, ethyl, propyl, isopropyl, trifluoromethyl or methoxy,
A is methyl, ethyl, propyl, isopropyl, butyl, isobutyl, sec-butyl, tert-butyl, cyclopropyl, cyclopentyl or cyclohexyl,
B is hydrogen, methyl or ethyl,
A, B and the carbon atom to which they are attached are saturated C₆-cycloalkyl, in which optionally a ring member is replaced by oxygen, and which is optionally monosubstituted by methyl, ethyl, trifluoromethyl, methoxy, ethoxy, propoxy or butoxy,
D is hydrogen, is methyl, ethyl, propyl, isopropyl, butyl, isobutyl, allyl, cyclopropyl, cyclopentyl or cyclohexyl,
A and D are together optionally methyl-substituted C₃-C₄-alkanediyl,
G is hydrogen (a) or is one of the groups 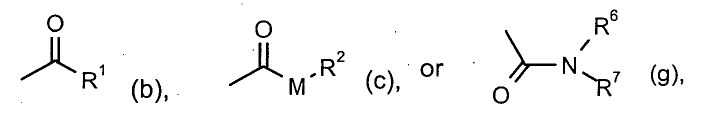 in which
M is oxygen or sulphur,
R¹ is C₁-C₈-alkyl, C₂-C₄-alkenyl, methoxymethyl, ethoxymethyl, ethylthiomethyl, cyclopropyl, cyclopentyl or cyclohexyl,
is optionally fluorine-, chlorine-, bromine-, cyano-, nitro-, methyl-, ethyl-, methoxy-, trifluoromethyl- or trifluoromethoxy-substituted phenyl,
is in each case optionally chlorine- or methyl-substituted pyridyl or thienyl,
R² is C₁-C₈-alkyl, C₂-C₄-alkenyl, methoxyethyl, ethoxyethyl or is phenyl or benzyl,
R⁶ and R⁷ are independently of one another methyl, ethyl or together are a C₅-alkylene radical in which the C₃-methylene group is replaced by oxygen.

4. Suspension concentrates according to Claim 1, comprising compounds of the formula (I') in which
V is N-D,
W is hydrogen or methyl,
X is chlorine, bromine or methyl,
Y and Z are independently of one another hydrogen, chlorine, bromine or methyl,
A, B and the carbon atom to which they are attached are saturated C₆-cycloalkyl, in which optionally a ring member is replaced by oxygen, and which is optionally monosubstituted by methyl, trifluoromethyl, methoxy, ethoxy, propoxy or butoxy,
D is hydrogen,
G is hydrogen (a) or is one of the groups 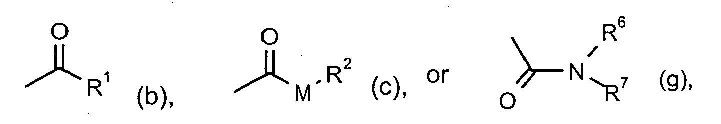 in which
M is oxygen or sulphur,
R¹ is C₁-C₈-alkyl, C₂-C₄-alkenyl, methoxymethyl, ethoxymethyl, ethylmethylthio, cyclopropyl, cyclopentyl, cyclohexyl or
is optionally fluorine-, chlorine-, bromine-, methyl-, methoxy-, trifluoromethyl-, trifluoromethoxy-, cyano- or nitro-substituted phenyl,
is in each case optionally chlorine- or methyl-substituted pyridyl or thienyl,
R² is C₁-C₈-alkyl, C₂-C₄-alkenyl, methoxyethyl, ethoxyethyl, phenyl or benzyl,
R⁶ and R⁷ are independently of one another methyl, ethyl or together are a C₅-alkylene radical, in which the C₃-methylene group is replaced by oxygen.

5. Suspension concentrates according to Claim 1, comprising compounds of the formula (I') in which
V is N-H, and
A and B together with the carbon atom to which they are attached are a substituted six-membered ring 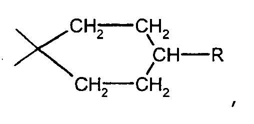
and the substituents W, X, Y, Z, G and R have the definitions indicated in the table
| **W** | **X** | **Y** | **Z** | **R** | **G** |
|---|---|---|---|---|---|
| H | Br | 5-CH₃ | H | OCH₃ | CO-i-C₃H₇ |
| H | Br | 5-CH³ | H | OCH₃ | CO₂-C₂H₅ |
| H | CH₃ | 5-CH₃ | H | OCH₃ | H |
| | CH₃ | 5-CH₃ | H | OCH₃ | CO₂-C₂H₅ |
| CH₃ | CH₃ | 3-Br | H | OCH₃ | H |
| CH₃ | CH₃ | 3-Cl | H | OCH₃ | H |
| H | Br | 4-CH₃ | 5-CH₃ | OCH₃ | CO-i-C₃H₇ |
| H | CH₃ | 4-Cl | 5-CH₃ | OCH₃ | CO₂C₂H₅ |
| CH₃ | CH₃ | 3-CH₃ | 4-CH₃ | OCH₃ | H |
| CH₃ | CH₃ | 3-Br | H | OC₂H₅ | CO-i-C₃H₇ |
| H | CH₃ | 4-CH₃ | 5-CH₃ | OC₂H₅ | CO-n-C₃H₇ |
| H | CH₃ | 4-CH₃ | 5-CH₃ | OC₂H₅ | CO-i-C₃H₇ |
| H | CH₃ | 4-CH₃ | 5-CH₃ | OC₂H₅ | CO-c-C₃H₅ |

6. Process for producing suspension concentrates according to Claim 1, **characterized in that**
- at least one room-temperature-solid compound of the formula (I'),
- at least one penetrant,
- at least one vegetable oil,
- at least one nonionic surfactant and/or at least one anionic surfactant, and
- optionally one or more additives from the groups of the emulsifiers, foam inhibitors, preservatives, antioxidants, colorants and/or inert filler materials
are mixed with one another and the resultant suspension is optionally subsequently ground.

7. Suspension concentrates according to Claim 1, **characterized by** the presence as penetrant of at least one alkanol alkoxylate of the formula (Id)
in which
t stands for the average value 10.5 and
u stands for the average value 8.4.

8. Suspension concentrates according to Claim 1, **characterized in that** the amount
- of compound of the formula (I') is between 5% and 30% by weight,
- of penetrants is between 5% and 30% by weight,
- of vegetable oil is between 20% and 55% by weight,
- of surfactants is between 2.5% and 30% by weight,
- of additives is between 0% and 25% by weight.

9. Use of suspension concentrates according to Claim 1 for applying the compounds of the formula (I') comprised to plants and/or their habitat.

10. Use of suspension concentrates according to Claim 1 for controlling insects.

11. Compositions **characterized by** the presence therein of a suspension concentrate according to Claim 1 and extenders and/or surface-active reagents.

## Revendications

1. Concentrés en suspension à base d'huile, constitués
- d'au moins un composé, solide à la température ambiante, de formule (I') 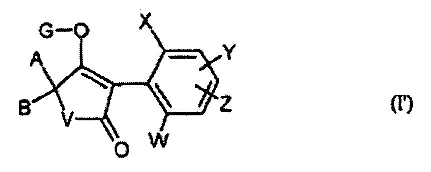 dans laquelle
V représente un groupe N-D,
X représente un halogène, un reste alkyle, alkoxy, halogénalkyle, halogénalkoxy ou cyano,
W, Y et Z représentent, indépendamment les uns des autres, l'hydrogène, un halogène, un reste alkyle, alkoxy, halogénalkyle, halogénalkoxy ou cyano,
A représente l'hydrogène, un reste alkyle, alkoxyalkyle, chacun éventuellement substitué par un halogène, un reste cycloalkyle saturé, éventuellement substitué,
dans lequel le cas échéant au moins un atome du noyau est remplacé par un hétéroatome,
B représente un atome d'hydrogène ou un reste alkyle,
A et B forment, conjointement avec l'atome de carbone auquel ils sont liés, un cycle saturé ou non saturé, non substitué ou substitué, contenant éventuellement au moins un hétéroatome,
D représente l'hydrogène ou un reste, éventuellement substitué, de la série alkyle, alcényle, alkoxyalkyle, cycloalkyle saturé, dans lequel le cas échéant un ou plusieurs chaînons du noyau sont remplacés par des hétéroatomes,
A et D forment, conjointement avec les atomes auxquels ils sont liés, un cycle saturé ou non saturé, non substitué ou substitué dans la partie A,D et contenant le cas échéant au moins un hétéroatome,
G représente l'hydrogène (a) ou l'un des groupes 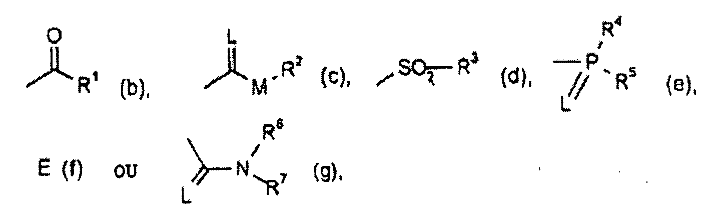 dans lesquels
E représente un ion métallique ou un ion ammonium,
L représente l'oxygène ou le soufre,
M représente l'oxygène ou le soufre,
R¹ représente un reste alkyle, alcényle, alkoxyalkyle, alkylthioalkyle, polyalkoxyalkyle chacun le cas échéant substitué par un halogène, ou un reste cycloalkyle, éventuellement substitué par un radical halogéno, alkyle ou alkoxy, qui peut être interrompu par au moins un hétéroatome, un reste phényle, phénylalkyle, hétaryle, phénoxyalkyle ou hétaryloxyalkyle chacun éventuellement substitué,
R² représente un reste alkyle, alcényle, alkoxyalkyle, polyalkoxyalkyle chacun éventuellement substitué par un halogène, ou un reste cycloalkyle, phényle ou benzyle chacun éventuellement substitué,
R³ est un reste alkyle éventuellement substitué par un halogène ou phényle éventuellement substitué,
R⁴ et R⁵ représentent, indépendamment l'un de l'autre, un reste alkyle, alkoxy, alkylamino, dialkylamino, alkylthio, alcénylthio, cycloalkylthio chacun éventuellement substitué par un halogène, ou un reste phényle, benzyle, phénoxy ou phénylthio chacun éventuellement substitué, et
R⁶ et R⁷ représentent, indépendamment l'un de l'autre, l'hydrogène, un reste alkyle, cycloalkyle, alcényle, alkoxy, alkoxyalkyle chacun éventuellement substitué par un halogène, un reste phényle éventuellement substitué, un reste benzyle éventuellement substitué, ou forment, conjointement avec l'atome N auquel ils sont liés, un noyau éventuellement substitué, le cas échéant interrompu par l'oxygène ou le soufre, et
- d'au moins un agent facilitant la pénétration, de formule (Id)
**CH₃-(CH₂)ₜ-CH₂-O-(CH₂-CH₂-O-)ᵤ-H** **(Id)**
dans laquelle
t représente des nombres de 9 à 10,5
et
u représente des nombres de 7 à 9,
- d'au moins une huile végétale,
- d'au moins un agent tensioactif non ionique et/ou d'au moins un agent tensioactif anionique, et
- le cas échéant d'un ou plusieurs additifs choisis dans les groupes des émulsifiants, des agents antimousse, des conservateurs, des antioxydants, des colorants et/ou des charges inertes.

2. Concentrés en suspension suivant la revendication 1, contenant des composés de formule (I') dans laquelle Y est un groupe N-D,
W représente l'hydrogène, un reste alkyle en C₁ à C₄, alkoxy en C₁ à C₄, le chlore, le brome ou le fluor,
X représente un reste alkyle en C₁ à C₄, alkoxy en C₁ à C₄, halogénalkyle en C₁ à C₄, le fluor, le chlore ou le brome,
Y et Z représentent, indépendamment l'un de l'autre, l'hydrogène, un reste alkyle en C₁ à C₄, un halogène, un reste alkoxy en C₁ à C₄ ou halogénalkyle en C₁ à C₄,
A représente l'hydrogène ou un reste alkyle en C₁ à C₆ ou cycloalkyle en C₃ à C₈, chacun éventuellement substitué par un halogène,
B représente l'hydrogène, un reste méthyle ou éthyle,
A,B et l'atome de carbone auquel ils sont liés représentent un reste cycloalkyle saturé en C₃ à C₆, dans lequel le cas échéant un chaînon est remplacé par l'oxygène ou le soufre et qui est éventuellement substitué une ou deux fois par un radical alkyle en C₁ à C₄, trifluorométhyle ou alkoxy en C₁ à C₄,
D représente l'hydrogène, un reste alkyle en C₁ à C₆, alcényle en C₃ ou C₄ ou cycloalkyle en C₃ à C₆, chacun éventuellement substitué par du fluor ou par du chlore,
A et D forment ensemble un reste alcanediyle en C₃ ou C₄, éventuellement substitué dans chaque cas par un radical méthyle, dans lequel le cas échéant un groupe méthylène est remplacé par du soufre,
G représente l'hydrogène (a) ou l'un des groupes 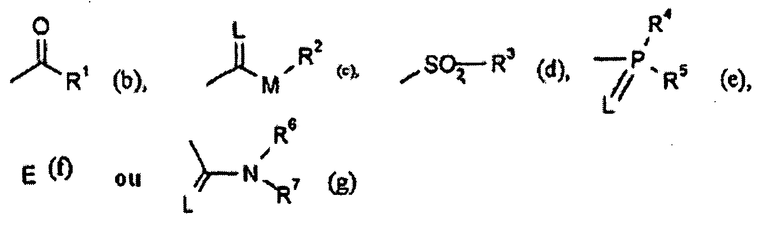 dans lesquels
E représente un ion métallique ou un ion ammonium,
L représente l'oxygène ou le soufre,
M représente l'oxygène ou le soufre,
R¹ représente un reste alkyle en C₁ à C₁₀, alcényle en C₂ à C₁₀, (alkoxy en C₁ à C₄)-(alkyle en C₁ à C₄), (alkylthio en C₁ à C₄)-(alkyle en C₁ à C₄) chacun éventuellement substitué par un halogène, ou un reste cycloalkyle en C₃ à C₆ éventuellement substitué par un radical fluoro, chloro, alkyle en C₁ à C₄ ou alkoxy en C₁ ou C₂,
un reste phényle éventuellement substitué par un radical fluoro, chloro, bromo, cyano, nitro, alkyle en C₁ à C₄, alkoxy en C₁ à C₄, trifluorométhyle ou trifluorométhoxy, un reste pyridyle ou thiényle, chacun éventuellement substitué par un radical chloro ou méthyle,
R² représente un reste alkyle en C₁ à C₁₀, alcényle en C₂ à C₁₀, (alkoxy en C₁ à C₄)-(alkyle en C₂ à C₄) chacun éventuellement substitué par du fluor ou par du chlore,
un reste cycloalkyle en C₅ ou C₆ éventuellement substitué par un radical méthyle ou méthoxy, ou
un reste phényle ou benzyle, chacun éventuellement substitué par un radical fluoro, chloro, bromo, cyano, nitro, alkyle en C₁ à C₄, alkoxy en C₁ à C₄, trifluorométhyle ou trifluorométhoxy,
R³ représente un reste alkyle en C₁ à C₄ éventuellement substitué par du fluor ou un reste phényle éventuellement substitué par un radical fluoro, chloro, bromo, alkyle en C₁ à C₄, alkoxy en C₁ à C₄, trifluorométhyle, trifluorométhoxy, cyano ou nitro,
R₄ est un reste alkyle en C₁ à C₄, alkoxy en C₁ à C₄, alkylamino en C₁ à C₄, alkylthio en C₁ à C₄ chacun éventuellement substitué par du fluor ou par du chlore, ou un reste phényle, phénoxy ou phénylthio chacun éventuellement substitué par un radical fluoro, chloro, bromo, nitro, cyano, alkoxy en C₁ à C₄, trifluorométhoxy, alkylthio en C₁ à C₄, halogénalkylthio en C₁ à C₄ , alkyle en C₁ à C₄ ou trifluorométhyle,
R⁵ est un reste alkoxy en C₁ à C₄ ou thioalkyle en C₁ à C₄,
R⁶ est un reste alkyle en C₁ à C₆, cycloalkyle en C₃ à C₆, alkoxy en C₁ à C₆, alcényle en C₃ à C₆, (alkoxy en C₁ à C₄)-(alkyle en C₁ à C₄),
R⁷ est un reste alkyle en C₁ à C₆, alcényle en C₃ à C₆ ou (alkoxy en C₁ à C₄)-(alkyle en C₁ à C₄),
R⁶ et R⁷ forment ensemble un reste alkylène en C₃ à C₆ éventuellement substitué par un radical méthyle ou éthyle, dans lequel le cas échéant un atome de carbone est remplacé par l'oxygène ou le soufre.

3. Concentrés en suspension suivant la revendication 1, contenant des composés de formule (I') dans laquelle
V représente un groupe N-D,
W représente l'hydrogène, un reste méthyle, éthyle, le chlore, le brome ou un reste méthoxy,
X représente le chlore, le brome, un reste méthyle, éthyle, propyle, isopropyle, méthoxy, éthoxy ou trifluorométhyle,
Y et Z représentent, indépendamment l'un de l'autre, l'hydrogène, le fluor, le chlore, le brome, un reste méthyle, éthyle, propyle, isopropyle, trifluorométhyle ou méthoxy,
A représente un reste méthyle, éthyle, propyle, isopropyle, butyle, isobutyle, sec.-butyle, tertiobutyle, cyclopropyle, cyclopentyle ou cyclohexyle,
B représente l'hydrogène, un reste méthyle ou éthyle,
A, B et l'atome de carbone auquel ils sont liés représentent un reste cycloalkyle en C₆ saturé, dans lequel le cas échéant un chaînon est remplacé par l'oxygène et qui est éventuellement substitué par un radical méthyle, éthyle, trifluorométhyle, méthoxy, éthoxy, propoxy ou butoxy,
D représente l'hydrogène, un reste méthyle, éthyle, propyle, isopropyle, butyle, isobutyle, allyle, cyclopropyle, cyclopentyle ou cyclohexyle,
A et D forment ensemble le cas échéant un reste alcanediyle en C₃ ou C₄ éventuellement substitué par un radical méthyle,
G représente l'hydrogène (a) ou l'un des groupes 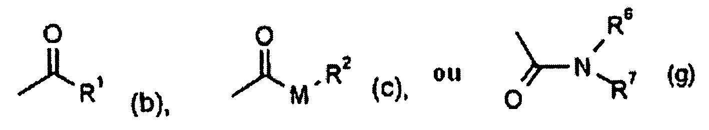 dans lesquels
M représente l'oxygène ou le soufre,
R¹ représente un reste alkyle en C₁ à C₈, alcényle en C₂ à C₄, méthoxyméthyle, éthoxyméthyle, éthylthiométhyle, cyclopropyle, cyclopentyle ou cyclohexyle,
un reste phényle éventuellement substitué par un radical fluoro, chloro, bromo, cyano, nitro, méthyle, éthyle, méthoxy, trifluorométhyle ou trifluorométhoxy, un reste pyridyle ou thiényle chacun éventuellement substitué par un radical chloro ou méthyle,
R² représente un reste alkyle en C₁ à C₈, alcényle en C₂ à C₄, méthoxyéthyle, éthoxyéthyle ou un reste phényle ou benzyle
R⁶ et R⁷ représentent, indépendamment l'un de l'autre, un reste méthyle, éthyle, ou forment ensemble un reste alkylène en C₅ dans lequel le groupe méthylène en position C₃ est remplacé par l'oxygène.

4. Concentrés en suspension suivant la revendication 1, contenant des composés de formule (I') dans laquelle
V est un groupe N-D,
W est l'oxygène ou un groupe méthyle,
X représente le chlore, le brome ou un reste méthyle,
Y et Z représentent, indépendamment l'un de l'autre, l'hydrogène, le chlore, le brome ou un reste méthyle,
A, B et l'atome de carbone auquel ils sont liés représentent un reste cycloalkyle saturé en C₆, dans lequel le cas échéant un chaînon est remplacé par l'oxygène et qui est éventuellement substitué une fois par un radical méthyle, trifluorométhyle, méthoxy, éthoxy, propoxy ou butoxy,
D représente l'hydrogène,
G représente l'hydrogène (a) ou l'un des groupes 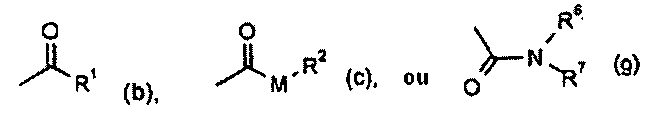 dans lesquels
M représente l'oxygène ou le soufre,
R¹ représente un reste alkyle en C₁ à C₈, alcényle en C₂ à C₄, méthoxyméthyle, éthoxyméthyle, éthylméthylthio, cyclopropyle, cyclopentyle, cyclohexyle ou
un reste phényle éventuellement substitué par un radical fluoro, chloro, bromo, méthyle, méthoxy, trifluorométhyle, trifluorométhoxy, cyano ou nitro, un reste pyridyle ou thiényle chacun éventuellement substitué par un radical chloro ou méthyle,
R² représente un reste alkyle en C₁ à C₈, alcényle en C₂ à C₄, méthoxyéthyle, éthoxyéthyle, phényle ou benzyle,
R⁶ et R⁷ représentent, indépendamment l'un de l'autre, un reste méthyle, éthyle, ou forment ensemble un reste alkylène en C₅ dans lequel le groupe méthylène en position C₃ est remplacé par l'oxygène.

5. Concentrés en suspension suivant la revendication 1, contenant des composés de formule (I') dans laquelle
V est un groupe N-H et
A et B forment, conjointement avec l'atome de carbone auquel ils sont liés, un noyau hexagonal substitué 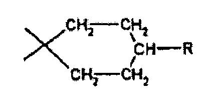
et les substituants W, X, Y, Z, G et R ont les définitions indiquées dans le tableau
| **W** | **X** | **Y** | **Z** | **R** | **G** |
|---|---|---|---|---|---|
| H | Br | 5-CH₃ | H | OCH₃ | CO-i-C₃H₇ |
| H | Br | 5-CH₃ | H | OCH₃ | CO₂-C₂H₅ |
| H | CH₃ | 5-CH₃ | H | OCH₃ | H |
| H | CH₃ | 5-CH₃ | H | OCH₃ | CO₂-C₂H₅ |
| CH₃ | CH₃ | 3-Br | H | OCH₃ | H |
| CH₃ | CH₃ | 3-CI | H | OCH₃ | H |
| H | Br | 4-CH₃ | 5-CH₃ | OCH₃ | CO-i-C₃H₇ |
| H | CH₃ | 4-Cl | 5-CH₃ | OCH₃ | CO₂C₂H₅ |
| CH₃ | CH₃ | 3-CH₃ | 4-CH₃ | OCH₃ | H |
| CH₃ | CH₃ | 3-Br | H | OC₂H₅ | CO-i-C₃H₇ |
| H | CH₃ | 4-CH₃ | 5-CH₃ | OC₂H₅ | CO-n- C₃H₇ |
| H | CH₃ | 4-CH₃ | 5-CH₃ | OC₂H₅ | CO-i-C₃H₇ |
| H | CH₃ | 4-CH₃ | 5-CH₃ | OC₂H₅ | CO-c- C₃H₅ |

6. Procédé de production de concentrés en suspension suivant la revendication 1, **caractérisé en ce qu'**on mélange ensemble
- au moins un composé, solide à la température ambiante, de formule (I'),
- au moins un agent facilitant la pénétration,
- au moins une huile végétale,
- au moins un agent tensioactif non ionique et/ou au moins un agent tensioactif anionique
et
- éventuellement un ou plusieurs additifs choisis dans les groupes des émulsifiants, des agents antimousse, des conservateurs, des antioxydants, des colorants et/ou des charges inertes
et on broie ensuite le cas échéant la suspension produite.

7. Concentrés en suspension suivant la revendication 1, **caractérisés en ce qu'**ils contiennent comme agent facilitant la pénétration au moins un alkoxylate d'alcanol de formule (Id) dans laquelle
t a la valeur moyenne 10,5 et
u a la valeur moyenne 8,4.

8. Concentrés en suspension suivant la revendication 1, **caractérisés en ce que**
- la teneur en composé de formule (I') est comprise entre 5 et 30 % en poids,
- la teneur en agents facilitant la pénétration est comprise entre 5 et 30 % en poids,
- la teneur en huile végétale est comprise entre 20 et 55 % en poids,
- la teneur en agents tensioactifs est comprise entre 2,5 et 30 % en poids,
- la teneur en additifs est comprise entre 0 et 25 % en poids.

9. Utilisation de concentrés en suspension suivant la revendication 1 pour l'application des composés de formule (I') qu'ils contiennent à des plantes et/ou à leur milieu.

10. Utilisation de concentrés en suspension suivant la revendication 1 pour la lutte contre des insectes.

11. Composition **caractérisée par** une teneur en un concentré en suspension suivant la revendication 1 et en diluant et/ou en réactifs tensioactifs.
